# EUROPEAN PATENT APPLICATION

(11) **EP 4 742 738 A1**
(43) Date of publication of application: **13.05.2026**
(21) Application number: 23944368.2
(22) Date of filing: 05.07.2023
(51) Int. Cl.: H04W 24/10, H04W 72/1263

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2023/025001
(87) International publication number: WO 2025/009120

(57) **Abstract**

A terminal according to an aspect of the present disclosure includes: a receiving section that receives information related to a plurality of channel measurement resources and information related to a report quantity; and a control section that performs, based on the information related to the report quantity, control to report an offset related to one or more parameters between one or more reference channel measurement resources selected from the plurality of channel measurement resources and the rest of the channel measurement resources other than the reference channel measurement resources, wherein the control section judges, based on at least one of the information related to the report quantity and a band type for reporting to be performed, a mapping order for channel state information.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is under study to report channel state information (CSI) based on reception of a reference signal. In addition, it is under study that a plurality of transmission/reception points (multiple Transmission/Reception Points (TRPs), multi-TRP (Multi TRP (MTRP))) or a plurality of panels (multiple panels, multi-panel) perform DL transmission to a terminal (user terminal, User Equipment (UE)). Coherent joint transmission (CJT) using multi-TRP/multi-panel is also under study. For Rel. 18 or later versions, it is assumed to employ CJT even in a case where connection between TRPs is not an ideal environment (for example, non-ideal backhaul environment).

However, studies have not sufficiently been made on how communication control (for example, CSI reporting or the like) in CJT using multi-TRP/multi-panel is performed.

In view of this, an object of the present disclosure is to provide a terminal, a radio communication method, and a base station that enable communication to be appropriately performed even in a case where CJT using multi-TRP/multi-panel is supported. Solution to Problem

A terminal according to an aspect of the present disclosure includes: a receiving section that receives information related to a plurality of channel measurement resources and information related to a report quantity; and a control section that performs, based on the information related to the report quantity, control to report an offset related to one or more parameters between one or more reference channel measurement resources selected from the plurality of channel measurement resources and the rest of the channel measurement resources other than the reference channel measurement resources, wherein the control section judges, based on at least one of the information related to the report quantity and a band type for reporting to be performed, a mapping order for channel state information.

### Advantageous Effects of Invention

An aspect of the present disclosure enables communication to be appropriately performed even in a case where CJT using multi-TRP/multi-panel is supported.

### Brief Description of Drawings

[FIG. 1] FIG. 1 is a diagram to show an example of reporting of an offset of delay/doppler/phase between a plurality of TRPs/CMRs according to a first embodiment.
[FIG. 2] FIGS. 2A to 2C are each a diagram to show an example of an offset of delay/doppler/phase between a plurality of TRPs/CMRs according to a second embodiment.
[FIG. 3] FIGS. 3A and 3B are each a diagram to show an example of an offset of delay/doppler/phase between a plurality of TRPs/CMRs according to the second embodiment.
[FIG. 4] FIGS. 4A and 4B are each a diagram to show an example of association between UCI (or codepoint) and a value range of offset according to the second embodiment.
[FIG. 5] FIGS. 5A to 5C are each a diagram to show an example of an offset of delay/doppler/phase between a plurality of TRPs/CMRs for a case that subband reporting is configured, according to a third embodiment.
[FIG. 6] FIGS. 6A to 6C are each a diagram to show an example of a CSI mapping order according to a fifth embodiment.
[FIG. 7] FIGS. 7A to 7C are each a diagram to show another example of the CSI mapping order according to the fifth embodiment.
[FIG. 8] FIGS. 8A to 8C are each a diagram to show another example of the CSI mapping order according to the fifth embodiment.
[FIG. 9] FIG. 9 is a diagram to show another example of the CSI mapping order according to the fifth embodiment.
[FIG. 10] FIG. 10 is a diagram to show an example of association between UCI (or codepoint) and a value range of offset according to a sixth embodiment.
[FIG. 11] FIG. 11 is a diagram to show an example of a schematic structure of a radio communication system according to one embodiment.
[FIG. 12] FIG. 12 is a diagram to show an example of a structure of a base station according to one embodiment.
[FIG. 13] FIG. 13 is a diagram to show an example of a structure of a user terminal according to one embodiment.
[FIG. 14] FIG. 14 is a diagram to show an example of a hardware structure of the base station and the user terminal according to one embodiment.
[FIG. 15] FIG. 15 is a diagram to show an example of a vehicle according to one embodiment.

### Description of Embodiments

### (CSI Report (or Reporting))

In Rel-15 NR, a terminal (also referred to as a user terminal, a User Equipment (UE), and the like) generates (also referred to as determines, calculates, estimates, measures, and the like) channel state information (CSI), based on a reference signal (RS) (or a resource for the RS), and transmits (also referred to as reports, feeds back, and the like) the generated CSI to a network (for example, a base station). The CSI may be transmitted to the base station by using an uplink control channel (for example, a Physical Uplink Control Channel (PUCCH)) or an uplink shared channel (for example, Physical Uplink Shared Channel (PUSCH)), for example.

The RS used for the generation of the CSI may be at least one of a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), and the like, for example.

The CSI-RS may include at least one of a non-zero power (NZP) CSI-RS and CSI-Interference Management (CSI-IM). The SS/PBCH block is a block including the SS and the PBCH (and a corresponding DMRS), and may be referred to as an SS block (SSB) or the like. The SS may include at least one of a primary synchronization signal (PSS) and a secondary synchronization signal (SSS).

Note that the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1 (Layer 1 Reference Signal Received Power)), L1-RSRQ (Reference Signal Received Quality), an L1-SINR (Signal to Interference plus Noise Ratio), an L1-SNR (Signal to Noise Ratio), and the like.

A UE may receive information related to a CSI report (report configuration information) and, based on the report configuration information, control the CSI report. The report configuration information may be, for example, a radio resource control (RRC) information element (IE) "CSI-ReportConfig." Note that, in the present disclosure, the RRC IE may be interchangeably interpreted as an RRC parameter, a higher layer parameter, and the like.

The report configuration information (for example, the RRC IE "CSI-ReportConfig") may include at least one of the following, for example.
- Information (report type information, for example, an RRC IE "reportConfigType") related to a type of the CSI report
- Information (report quantity information, for example, an RRC IE "reportQuantity") related to one or more quantities (one or more CSI parameters) of the CSI to be reported
- Information (resource information, for example, an RRC IE "CSI-ResourceConfigId") related to the resource for the RS used for generation of the quantity (the CSI parameter)
- Information (frequency domain information, for example, an RRC IE "reportFreqConfiguration") related to the frequency domain being a target of the CSI report

For example, the report type information may indicate a periodic CSI (P-CSI) report, an aperiodic CSI (A-CSI) report, or a semi-persistent (semi-permanent) CSI (SP-CSI) report.

The report quantity information may specify a combination of at least one of the CSI parameters described above (for example, CRI, RI, PMI, CQI, LI, L1-RSRP, and the like).

The resource information may be an ID of the resource for the RS. The resource for the RS may include, for example, a non-zero power CSI-RS resource or SSB, and a CSI-IM resource (for example, a zero power CSI-RS resource).

The frequency domain information may indicate a frequency granularity of the CSI report. The frequency granularity may include, for example, a wideband and a subband. The wideband is the entire CSI reporting band. The wideband may be the entirety of a certain carrier (component carrier (CC), cell, serving cell) or may be the entirety of a bandwidth part (BWP) of a certain carrier, for example. The wideband may be interpreted as CSI reporting band, the entire CSI reporting band, and the like.

The subband may be part of the wideband and constituted of one or more resource blocks (RBs or physical resource blocks (PRBs)). The size of the subband may be determined according to the size of the BWP (the number of PRBs).

The frequency domain information may indicate which of a wideband or subband PMI is to be reported (for example, the frequency domain information may include an RRC IE "pmi-FormatIndicator" used to determine whether reporting is wideband PMI reporting or subband PMI reporting). A UE may determine the frequency granularity for a CSI report (in other words, whether reporting is wideband PMI reporting or subband PMI reporting), on the basis of at least one of the report quantity information and the frequency domain information.

In a case where wideband PMI reporting is configured (determined), one wideband PMI may be reported for the entire CSI reporting band. In contrast, in a case where subband PMI reporting is configured, a single wideband indication i1 may be reported for the entire CSI reporting band, and a subband indication (one subband indication) i2 for each of one or more subbands in the entire CSI reporting (for example, a subband indication for each subband) may be reported.

A UE performs channel estimation by using a received RS to estimate a channel matrix H. The UE feeds back an index (PMI) determined based on the estimated channel matrix.

The PMI may indicate a precoder matrix (also simply referred to as a precoder) that the UE considers appropriate for the use for downlink (DL) transmission to the UE. Each value of the PMI may correspond to one precoder matrix. A set of values of the PMI may correspond to a different set of precoder matrices referred to as a precoder codebook (also simply referred to as a codebook).

In the space domain, the CSI report may include one or more types of CSI. For example, the CSI may include at least one of a first type (Type 1 CSI) to be used for selection of a single beam and a second type (Type 2 CSI) to be used for selection of multi-beam. The single beam may be interpreted as a single layer, and the multi-beam may be interpreted as a plurality of beams. Type 1 CSI may not assume multi-user multiple input multiple output (MIMO) and Type 2 CSI may assume multi-user MIMO.

The codebook may include a codebook for Type 1 CSI (also referred to as Type 1 codebook or the like) and a codebook for Type 2 CSI (also referred to as Type 2 codebook or the like). Type 1 CSI may include Type 1 single-panel CSI and Type 1 multi-panel CSI, for which respective different codebooks (Type 1 single-panel codebook and Type 1 multi-panel codebook) may be defined.

In the present disclosure, Type 1 and Type I may be interchangeably interpreted. In the present disclosure, Type 2 and Type II may be interchangeably interpreted.

An uplink control information (UCI) type may include at least one of a Hybrid Automatic Repeat reQuest ACKnowledgement (HARQ-ACK), a scheduling request (SR), and CSI. The UCI may be carried on a PUCCH, or may be carried on a PUSCH.

In Rel-15 NR, the UCI is able to include one CSI part for wideband PMI feedback. CSI report #n includes PMI wideband information, if reported.

In Rel-15 NR, the UCI is able to include two CSI parts for subband PMI feedback. CSI part 1 includes wideband PMI information. CSI part 2 includes one piece of wideband PMI information and some pieces of subband PMI information. CSI part 1 and CSI part 2 are coded separately.

In Rel-15 NR, a UE is configured with reporting setting of N (N ≥ 1) CSI report configurations and resource setting of M (M ≥ 1) CSI resource configurations, by a higher layer. For example, the CSI report configurations (CSI-ReportConfig) include setting of resources for channel measurement (resourcesForChannelMeasurement), setting of CSI-IM resources for interference (csi-IM-ResourceForInterference), setting of NZP-CSI-RSs for interference (nzp-CSI-RS-ResourceForInterference), report quantity (reportQuantity), and the like. Each of the setting of resources for channel measurement, the setting of CSI-IM resources for interference, and the setting of NZP-CSI-RSs for interference is associated with a CSI resource configuration (CSI-ResourceConfig, CSI-ResourceConfigId). The CSI resource configuration includes a list of CSI-RS resource sets (csi-RS-ResourceSetList, for example, NZP-CSI-RS resource sets or CSI-IM resource sets).

For both of FR1 and FR2, in order to enable more dynamic channel/interference hypotheses for NCJT, evaluation and definition of CSI reporting for DL transmission for at least one of multi-TRP and multi-panel are under study.

### (Multi-TRP)

For NR, it is under study that one or a plurality of transmission/reception points (TRPs) (multi-TRP (multi TRP (MTRP))) perform DL transmission to a UE by using one or a plurality of panels (multi-panel). It is also under study that a UE performs UL transmission to one or a plurality of TRPs by using one or a plurality of panels.

Note that the plurality of TRPs may correspond to the same cell identifier (ID) or may correspond to different cell IDs. The cell ID may be a physical cell ID or a virtual cell ID.

The multi-TRP (TRPs #1 and #2) may be connected via an ideal/non-ideal backhaul to exchange information, data, or the like. Each TRP of the multi-TRP may transmit a different codeword (Code Word (CW)) and a different layer. As one mode of multi-TRP transmission, coherent joint transmission (CJT) or non-coherent joint transmission (NCJT) may be used.

In NCJT, for example, TRP 1 performs modulation mapping on a first codeword, performs layer mapping, and transmits a first PDSCH in layers of a first number (for example, two layers) by using first precoding. TRP 2 performs modulation mapping on a second codeword, performs layer mapping, and transmits a second PDSCH in layers of a second number (for example, two layers) by using second precoding.

Note that a plurality of PDSCHs (multi-PDSCH) transmitted by NCJT may be defined to partially or entirely overlap in terms of at least one of the time and frequency domains. In other words, a first PDSCH from a first TRP and a second PDSCH from a second TRP may have an overlap in terms of at least one of the time and frequency resources.

The first PDSCH and second PDSCH may be assumed not to be in a quasi-co-location (QCL) relationship (not quasi-co-located). Reception of multi-PDSCH may be interpreted as simultaneous reception of PDSCHs of a QCL type other than a certain QCL type (for example, QCL type D).

The plurality of PDSCHs (which may be referred to as multi-PDSCH (multiple PDSCHs)) from the multi-TRP may be scheduled by using one piece of DCI (single DCI (S-DCI), single PDCCH) (single-master mode). Such one piece of DCI may be transmitted from one TRP of the multi-TRP. The plurality of PDSCHs from the multi-TRP may each be scheduled by using a respective one of a plurality of pieces of DCI (multi-DCI (M-DCI), multi-PDCCH (multiple PDCCHs)) (multi-master mode). The plurality of pieces of DCI may each be transmitted from a respective one of the multi-TRP. For different TRPs, the UE may be assumed to transmit separate CSI reports related to the respective TRPs. Such CSI feedback may be referred to as separate feedback, separate CSI feedback, and the like. In the present disclosure, "separate" may be interchangeably interpreted as "independent."

Note that CSI feedback in which a CSI report related to both the TRPs is transmitted to one of the TRPs may be used. Such CSI feedback may be referred to as joint feedback, joint CSI feedback, and the like.

For example, in a case of separate feedback, the UE is configured to transmit, to TRP #1, a CSI report for TRP #1 by using a certain PUCCH (PUCCH 1) and to transmit, to TRP #2, a CSI report for TRP #2 by using another PUCCH (PUCCH 2). In a case of joint feedback, the UE transmits, to TRP #1 or #2, a CSI report for TRP #1 and a CSI report for TRP #2.

Such a multi-TRP scenario allows more flexible transmission control using a channel of good quality.

### (CSI Report Configuration)

CSI report configurations (CSI-ReportConfig) in Rel. 16 include a CSI-RS resource for channel measurement (resourcesForChannelMeasurement (CMR)), a CSI-RS resource for interference measurement (csi-IM-ResourcesForInterference (ZP-IMR), nzp-CSI-RS-ResourcesForInterference (NZP-IMR)), and the like besides a codebook configuration (CodebookConfig). Of parameters for CSI-ReportConfig, parameters except codebookConfig-r16 are also included in CSI report configurations in Rel. 15.

For Rel. 17, an enhanced CSI report configuration (CSI-ReportConfig) for multi-TRP CSI measurement/reporting using NCJT is under study. In such a CSI report configuration, two CMR groups each corresponding to a respective one of two TRPs are configured. A CMR in each of the CMR groups may be used for measurement of at least one of multi-TRP using NCJT and a single TRP. N CMR pairs for NCJT are configured by RRC signaling. A UE may be configured with whether to use a CMR of a CMR pair for single-TRP measurement, by RRC signaling.

For CSI reporting that is configured with a single CSI report configuration and that is related to an NCJT measurement of multi-TRP/panel, it is under study to support at least one of Options 1 and 2 below.

### <Option 1>

The UE is configured to report X (X = 0, 1, 2) pieces of CSI related to single-TRP measurement hypotheses and one piece of CSI related to an NCJT measurement. In a case of X = 2, two pieces of CSI relate to two different single-TRP measurements using CMRs of different CMR groups.

### <Option 2>

The UE may be configured to report one piece of CSI related to the best measurement result in NCJT and single-TRP measurement hypotheses.

As described above, in Rel. 15/16, a CBSR is configured per codebook configuration per CSI report configuration. In other words, the CBSR is applied to every CMR and the like in the corresponding CSI report configuration.

Note that, in a CSI report configuration for multi-TRP in Rel. 17 by a CSI report configuration, when Option 1 and/or Option 2 described above is applied, configuration for measurement as below may be made.
Option 1 (X = 0): Measurement of only CSI for NCJT
Option 1 (X = 1): Measurement of CSI for NCJT and CSI for a single TRP (one TRP)
Option 1 (X = 2): Measurement of CSI for NCJT and CSI for a single TRP (two TRPs)
Option 2: Measurement of both of CSI for NCJT and CSI for a single TRP

### (JT)

Joint transmission (JT) may mean simultaneous data transmission from a plurality of points (for example, TRPs) to a single UE.

Rel. 17 supports non-coherent joint transmission (NCJT) from two TRPs. PDSCHs from the two TRPs may be independently precoded and independently decoded. The frequency resources may have no overlap (non-overlapping), may partially have an overlap (partial-overlapping), or may fully overlap with each other (full-overlapping). In a case where an overlap occurs, a PDSCH from one TRP is to be an interference to a PDSCH from the other TRP.

For Rel. 18, it is under study to support coherent joint transmission (CJT) using up to 4 TRPs. Pieces of data from four TRPs may be coherently precoded and transmitted to a UE on the same time-frequency resource. For example, taking account of channels from the four TRPs, the same precoding matrix may be used. Coherent may mean that there is a certain relationship between phases of a plurality of received signals. With use of 4-TRP joint precoding, signal quality may be improved and there may be no interference between the four TRPs. The data may receive an interference from outside the four TRPs only.

### (CJT)

For Rel. 18, it is under study to support coherent joint transmission (CJT, mTRP CJT) using up to 4 TRPs. Pieces of data from four TRPs may be coherently precoded and transmitted to a UE on the same time-frequency resource. For example, taking account of channels from the four TRPs, the same precoding matrix may be used. Coherent may mean that there is a certain relationship between phases of a plurality of received signals. With use of 4-TRP joint precoding, signal quality may be improved and there may be no interference in a level between the four TRPs. The data may receive an interference from outside the four TRPs only.

For Rel. 18, between TRPs using CJT, it is under study to perform CJT in a non-ideal environment (non-ideal backhaul) with a delay/doppler/phase difference between the TRPs, not limited to an ideal environment without any delay/doppler/phase difference.

In order to enable CJT in such a non-ideal environment (non-ideal backhaul) with a delay/doppler/phase difference between TRPs, it is assumed to support a system that a UE performs measurement of a delay/doppler/phase difference (for example, offset) between the TRPs for reporting to a base station (for example, UE assisted calibration).

However, studies have not sufficiently been made on how such measurement/reporting of a delay/doppler/phase difference (for example, offset) between TRPs is controlled. Unless measurement/reporting of a delay/doppler/phase difference (for example, offset) between TRPs is appropriately performed, communication quality may be degraded.

In view of this, the inventors of the present invention studied on operations of measurement/reporting of a delay/doppler/phase difference (for example, offset) between TRPs, and came up with the idea of an aspect of embodiments.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, drop, stop, cancel, puncture, rate match, postpone, not transmit, and the like may be interchangeably interpreted.

In the present disclosure, a cell group, a serving cell group, a master cell group (MCG), and a secondary cell group (SCG) may be interchangeably interpreted. L1/L2, L1/L2 signaling, and DCI/MAC CE may be interchangeably interpreted. A serving cell may be interpreted as a cell where a PDSCH is transmitted. A candidate cell may mean a cell of candidate to be a serving cell by L1/L2 inter-cell mobility.

In the present disclosure, a cell, a PCI, a serving cell, a source serving cell, a source cell, a CC, a BWP, a BWP in a CC, and a band may be interchangeably interpreted. In the present disclosure, a cell, a PCI, a cell of an additional PCI, an additional cell, another cell, a non-serving cell, a cell having a different PCI, a candidate cell, a candidate serving cell, a cell having a PCI different from a PCI of a current serving cell, another serving cell, and a target cell may be interchangeably interpreted. In the present disclosure, switch, change, and update may be interchangeably interpreted. A serving cell may be interpreted as a serving cell before switch or a serving cell after switch.

In the present disclosure, a TRP, a CMR, an NZP-CSI-RS resource, and a CRI may be interchangeably interpreted. In embodiments, a CMR group/set, an NZP-CSI-RS resource group/set, and a CRI group/set may be interchangeably interpreted.

### (Radio Communication Method)

### <First Embodiment>

A first embodiment relates to reporting of an offset of a certain parameter between a plurality of TRPs/CMRs (for example, inter-TRP/CMR).

The certain parameter may be at least one of delay, doppler, and phase. The certain parameter is, of course, not limited to them.

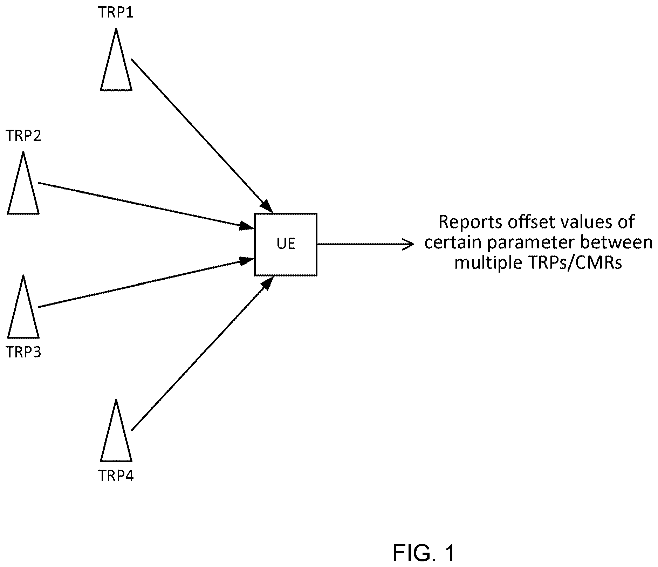

A UE may support reporting of at least one of a delay offset, a doppler offset, and a phase offset between a plurality of TRPs/CMRs (see FIG. 1). Doppler and phase may be reported separately or may be reported as a common value (or same value). Such an offset to be reported by the UE may be configured by using a higher layer parameter or the like.

The parameter to be reported by the UE may be configured for the UE by using a higher layer parameter related to a report quantity (for example, reporting quantity). For example, reporting related to the delay offset/doppler offset/phase offset between the TRPs/CMRs may be configured by using a new RRC parameter related to the report quantity.

With the higher layer parameter related to the report quantity, at least one of Configuration 1-1 to Configuration 1-4 below may be configured.
- Configuration 1-1: Delay offset
- Configuration 1-2: Doppler/phase offset
- Configuration 1-3: Delay and doppler/phase offsets
- Configuration 1-4: Amplitude offset together with Configuration 1-1/1-2/1-3

In a case where the delay offset and doppler/phase offset are supported for reporting of an offset value between a plurality of TRPs/CMRs, Configuration 1-1 corresponds to a case that only the delay offset is configured (a case that no doppler/phase offset is configured). Configuration 1-2 corresponds to a case that only the doppler/phase offset is configured (a case that no delay offset is configured). Note that the delay offset and doppler/phase offset may each be defined in combination with another parameter (for example, CRI).

An offset of the certain parameter (for example, new report quantity (new reporting quantity) may be a separate/independent report quantity (separate/standalone reporting quantity). Alternatively, the offset of the certain parameter (for example, new report quantity (new reporting quantity) may be an additional report quantity reported together with a report quantity (for example, L1-RSRP/SINR, TDCP, CSI, or the like) supported in an existing system (for example, Rel. 17).

For example, the offset of the certain parameter may be added to a report quantity (for example, reportQuantity) in a CSI report configuration (for example, CSI-ReportConfig) supported in an existing system (for example, Rel. 17). In this case, the offset of the certain parameter may be added, as an option, in addition to another report quantity (for example, cri/RI/PMI/CQI/il/RSRP/LI or the like) or may be added in combination with another report quantity/parameter (for example, CRI-delay offset/CRI-doppler/phase offset, CRI-delay offset-doppler/phase offset, or the like). Alternatively, the offset of the certain parameter may be configured as a new report quantity apart from the report quantity, in the CSI report configuration (for example, CSI-ReportConfig) supported in the existing system.

The offset of the certain parameter (for example, new report quantity) may be configured as wideband reporting. The wideband reporting may be configured per CMR/TRP or may be configured in common to CMRs/TRPs. Alternatively, the offset of the certain parameter (for example, new report quantity) may be configured as subband reporting. The subband reporting may be configured per CMR/TRP or may be configured in common to CMRs/TRPs. For the subband reporting, a subband number/the number of subbands/subband granularity may be configured.

For CMR configuration, four CSI-RS resources at maximum may be configured for a UE. The UE may measure, based on such configured four CSI-RS resources at maximum, at least one of a delay offset, doppler offset, and phase offset between a plurality of TRPs/CMRs to report the measurement result (for example, information related to the offset).

Alternatively, for CMR configuration, TRS resources (sets) from four TRPs at maximum (for example, four TRS resources (sets) at maximum) may be configured for the UE. The UE may measure, based on such configured four TRS resources (sets) at maximum, at least one of a delay offset, doppler offset, and phase offset between a plurality of TRPs/CMRs to report the measurement result (for example, information related to the offset).

### <Second Embodiment>

A second embodiment relates to a case that wideband reporting is configured as reporting of an offset of a certain parameter between a plurality of TRPs/CMRs (for example, inter-TRP/CMR).

A network (for example, base station) may configure, for a UE, wideband reporting as reporting of an offset of a certain parameter (for example, delay/doppler/phase). In a case where wideband reporting is configured, the UE reports the offset of the certain parameter with respect to a wideband.

The UE may be configured with up to N (or N or less) CSI-RS resources/TRS resources. In the present disclosure, a resource may be interpreted as a resource set. For example, a CSI-RS resource may be interpreted as a CSI-RS resource set and a TRS resource may be interpreted as a TRS resource set.

N may be defined in a specification (for example, defined with a fixed value), may be determined based on a UE capability, or may be configured for a UE from a base station by using a higher layer parameter. Although the following description assumes a case of N = 4, the value of N is not limited to this.

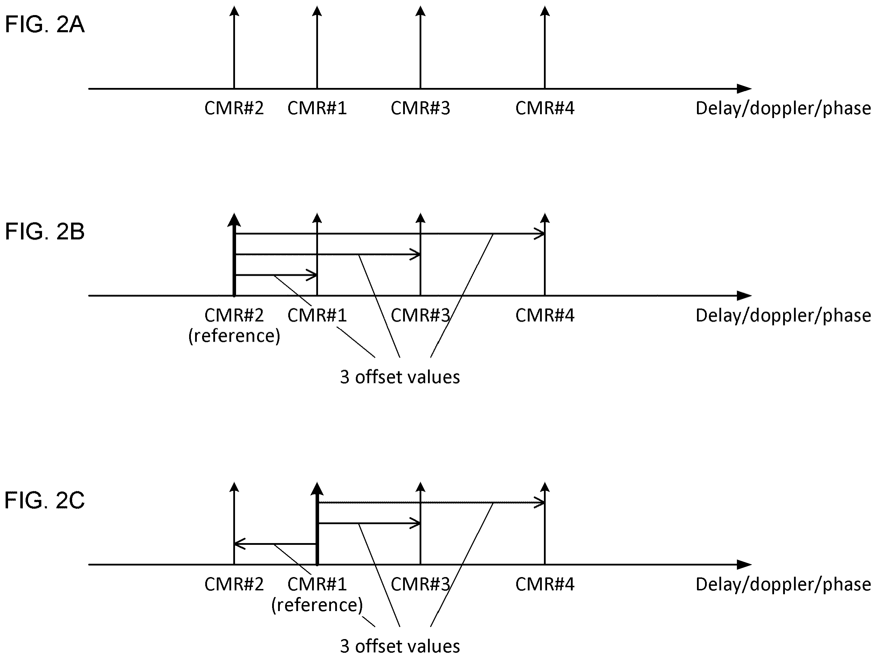

The UE may measure configured N CSI-RS resources/TRS resources to report information related to the offset of the certain parameter (for example, delay/doppler/phase) between the CSI-RS resources/TRS resources. FIG. 2A shows an example of a relation of delay/doppler/phase in N TRPs/CMRs (here, N = 4).

The UE may report information related to a TRP/CMR to be a reference (for example, a reference TRP/CMR). Such information related to the reference TRP/CMR may be a CRI (for example, reference CRI) corresponding to the reference TRP/CMR.

Regarding the reference TRP/CMR, the delay/doppler/phase of the TRP/CMR may be assumed to be zero. The reference TRP/CMR may be interpreted as a reference CSI-RS resource/TRS resource.

For reporting of the reference TRP/CMR, at least one of Option 2-1 to Option 2-3 below may be applied.

### {Option 2-1}

The reference TRP/CMR may be determined by the UE. A CRI (for example, reference CRI) corresponding to the reference TRP/CMR may be reported by the UE. The reference CMR may be indicated by the reference CRI.

For the rest of the TRPs/CMRs other than the reference TRP/CMR (for example, N - 1 TRPs/CMRs), the UE may report offset values of delay/doppler/phase between the TRPs/CMRs (see FIG. 2B). The offset values correspond to offsets between the reference TRP/CMR and the other TRPs/CMRs. The UE may report N - 1 offset values.

FIG. 2B shows a case that the UE determines CMR #2 as the reference TRP/CMR and reports CRI #2 corresponding to such CRM #2. The UE may report offset values (here, three offset values) between CRM #2 and the other CMRs (here, CMR #1/CMR #3/CMR #4).

The N - 1 offset values may be defined as positive values (for example, [0, X]). The UE may assume that the reference TRP/CMR has delay/doppler/phase = 0 and the reference TRP/CMR has the minimum delay/doppler/phase. In a case where the reference TRP/CMR has the minimum delay/doppler/phase, offsets of delay/doppler/phase corresponding to the other TRPs/CMRs all have positive values (or positive/plus values).

Alternatively, the N - 1 offset values may be defined as negative values (for example, [-X, 0]). The UE may assume that the reference TRP/CMR has delay/doppler/phase = 0 and the reference TRP/CMR has the maximum delay/doppler/phase. In a case where the reference TRP/CMR has the maximum delay/doppler/phase, offsets of delay/doppler/phase corresponding to the other TRPs/CMRs all have negative values (or negative/minus values).

### {Option 2-2}

The reference TRP/CMR may be indicated by the network (for example, base station). Regarding a CRI indicated as the reference TRP/CMR, the UE may assume that the delay/doppler/phase is zero. Another offset value per TRP/CMR (for example, N - 1 offset values) may be calculated/acquired based on the reference TRP/CMR. The UE may report information related to the reference TRP/CMR (for example, a CRI corresponding to the reference TRP/CMR) and the acquired offset values.

FIG. 2C shows a case where the network indicates that the reference TRP/CMR is CMR #1. The UE may report offset values (here, three offset values) between CRM #1 and the other CMRs (here, CMR #2/CMR #3/CMR #4). The three offset values may include a positive value and a negative value.

For reporting of the N - 1 offset values, a certain value range may be defined. The UE may perform control to perform such reporting from the certain value range. The certain value range may be, for example, [-Y1, Y2]. Y1 and Y2 may be Y1 = Y2.

Alternatively, for reporting of the N - 1 offset values, in addition to an offset value range between [0, Y], a positive indication or negative indication may be reported.

### {Option 2-3}

For the reference TRP/CMR, a certain TRP/CMR may be defined/employed. The certain TRP/CMR may be a first/last configured CMR or may be a CMR having the lowest/highest CRI index. Regarding a CRI defined as the reference TRP/CMR, the UE may assume that the delay/doppler/phase is zero. Another offset value per TRP/CMR (for example, N - 1 offset values) may be calculated/acquired based on the reference TRP/CMR.

For reporting of the N - 1 offset values, a certain value range may be defined. The UE may perform control to perform such reporting from the certain value range. The certain value range may be, for example, [-Y1, Y2]. Y1 and Y2 may be Y1 = Y2.

Alternatively, for reporting of the N - 1 offset values, in addition to an offset value range between [0, Y], a positive indication or negative indication may be reported.

### {Variation 1}

Although Option 2-1 to Option 2-3 indicate a case that a common (or one) reference TRP/CMR is provided with respect to a plurality of (for example, N - 1) TRPs/CMRs in reporting of the N - 1 offset values (for example, offset values between the reference CMR and the other CMRs), the embodiment is not limited to this.

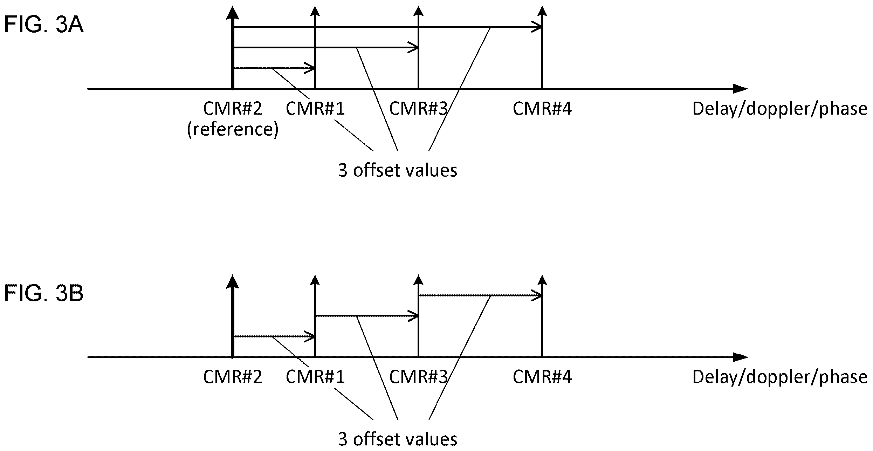

For example, in FIG. 3A, in a case where CMR #1 to CMR #4 are configured, with one CMR (here, CRM #2) being a reference CMR, offsets for the other CMRs (here, CMRs #1, #3, and #4) with respect to CMR #2 are reported. In other words, a common (or one) reference CMR #2 is provided with respect to CMRs #1, #3, and #4.

In contrast, TRPs/CMRs may have the respective different reference TRPs/CMRs. For example, FIG. 3B shows a case that, when CMR #1 to CMR #4 are configured, the reference CMR for CRM #1 is CMR #2, the reference CMR for CMR #3 is CMR #1, and the reference CRM for CMR #4 is CMR #3. Here, a CRI corresponding to CMR #2 having the minimum delay/doppler/phase value (or a first determined reference CMR) may be reported. In this case, information related to an order (here, CMR #1 → CMR #3 → CMR #4) of CMRs (or CRIs corresponding to the CMRs) may be reported.

In FIG. 3B, the order of CMRs (for example, a reference for CMR #j is CMR #i) may be determined based on at least one of a configured CMR order (for example, configured CMR ordering) and a configured CSI-RS resource index, or may be determined and reported by the UE.

As shown in FIG. 3B, TRPs/CMRs have the respective different reference TRPs/CMRs (for example, the delay/doppler/phase values are each based on a next TRP/CMR as the reference TRP/CMR), thereby allowing the offset values to be small values. This enables overhead of CSI (or UCI) related to offset values to be reduced.

### {Variation 2}

A plurality of candidates for a value range of offset of delay/doppler/phase may be configured and a candidate corresponding to each offset value may be reported. For example, the value range of offset of delay/doppler/phase may be configured corresponding to a codepoint/bit value and the UE may report a codepoint/bit value corresponding to each offset value.

For the value range of offset, only one pattern (or one table) may be defined/configured, or a plurality of patterns (or tables) may be defined/configured.

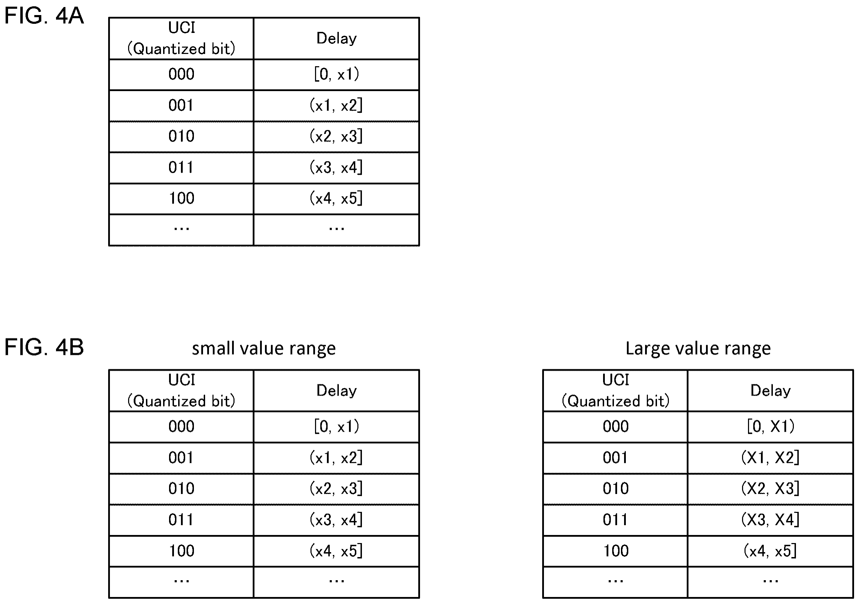

For example, association/table between an offset value and a UCI value (or quantized bit, codepoint) may be defined in a specification (see FIG. 4A). FIG. 4A shows an example of a table that delay offsets are associated with UCI values (or codepoints). The UCI size may be a fixed value.

A plurality of tables of UCI values corresponding to offset values may be provided (see FIG. 4B). The base station/UE may select/configure a certain table, based on a scenario (for example, a level of backhaul delay). For example, the value range of offset corresponding to each UCI value may be configured to be narrow in first association/table, and the value range of offset corresponding to each UCI value may be configured to be wide in second association/table.

With this, when to use the first association/table and when to use the second association/table are selected depending on scenarios, thereby allowing a case with a small offset value and a case with a large offset value to be flexibly coped with. Which of the associations/tables to use may be determined by the UE or may be indicated to the UE by the base station. In a case where the UE select the association/table to use, information related to the selected association/table may be reported.

In a specification, one or a plurality of tables for offset values of delay/doppler/phase may be defined and the offset values in the table(s) may be updated by RRC/MAC CE.

The UCI (or codepoint) size corresponding to an offset value of delay/doppler/phase may be defined in a fixed manner in a specification or may be configurable by RRC configuration.

The UCI (or codepoint) size corresponding to an offset value of delay/doppler/phase may be a variable size. The size may be determined every CSI reporting time by the UE. The UCI (or codepoint) size corresponding to an offset value of delay/doppler/phase may be reported in CSI part 1. This allows the base station to judge the size of CSI part 2. In this case, the offset value of delay/doppler/phase may be reported in CSI part 2.

<Third Embodiment>

A third embodiment relates to a case that subband reporting is configured as reporting of an offset of a certain parameter between a plurality of TRPs/CMRs (for example, inter-TRP/CMR). The third embodiment may be employed individually, or may be employed in combination with the first embodiment/second embodiment.

A network (for example, base station) may configure, for a UE, subband reporting as reporting of an offset of a certain parameter (for example, delay/doppler/phase). In a case where subband reporting is configured, the UE reports the offset of the certain parameter with respect to a subband.

The UE may be configured with up to N (or N or less) CSI-RS resources/TRS resources. In the present disclosure, a resource may be interpreted as a resource set. For example, a CSI-RS resource may be interpreted as a CSI-RS resource set and a TRS resource may be interpreted as a TRS resource set.

N may be defined in a specification (for example, defined with a fixed value), may be determined based on a UE capability, or may be configured for a UE from a base station by using a higher layer parameter. Although the following description assumes a case of N = 4, the value of N is not limited to this.

The UE may measure configured N CSI-RS resources/TRS resources to report information related to the offset of the certain parameter (for example, delay/doppler/phase) between the CSI-RS resources/TRS resources.

The UE may report information related to a TRP/CMR to be a reference (for example, a reference TRP/CMR). Such information related to the reference TRP/CMR may be a CRI (for example, reference CRI) corresponding to the reference TRP/CMR.

Regarding the reference TRP/CMR, the delay/doppler/phase of the TRP/CMR may be assumed to be zero. The reference TRP/CMR may be interpreted as a reference CSI-RS resource/TRS resource.

For reporting of the reference TRP/CMR, at least one of Option 3-1 to Option 3-3 below may be applied.

### {Option 3-1}

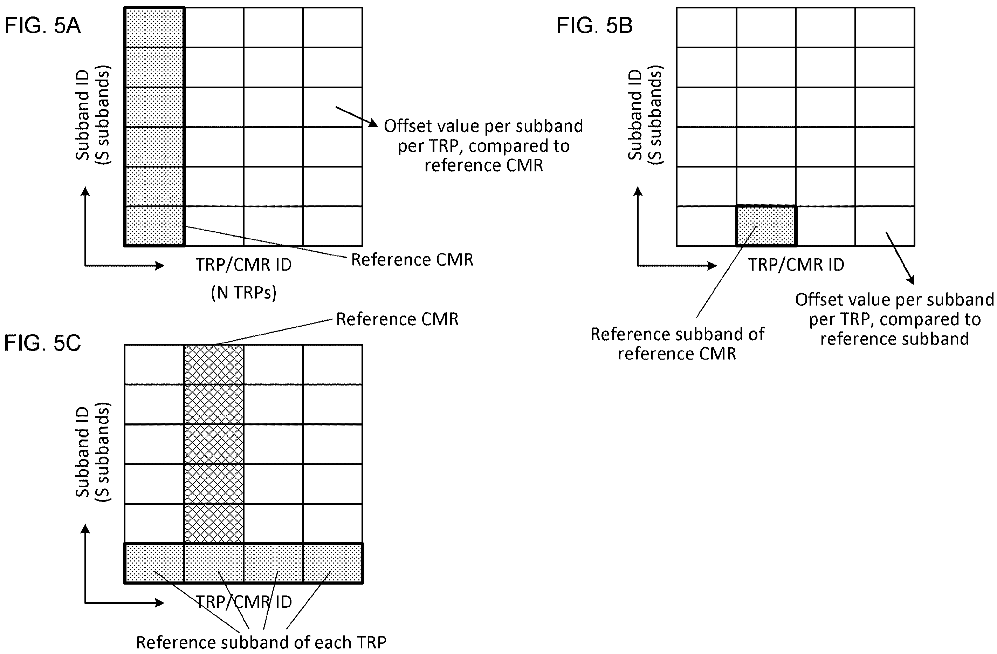

In a case where subband reporting is configured, the reference TRP/CMR may be determined by using at least one of Option 2-1 to Option 2-3 described above. In this case, the UE may report (N - 1) × S offset values (see FIG. 5A). S may be the number of subbands (for example, subband number) per TRP/CMR.

Regarding the reference TRP/CMR, the delay/doppler/phase of the wideband may be assumed to be zero. Meanwhile, for the rest of the TRPs/CMRs (for example, N - 1 TRPs/CMRs), subband reporting (here, (N - 1) × S) may be performed.

### {Option 3-2}

In a case where subband reporting is configured, the reference TRP/CMR and a reference subband index corresponding to the reference TRP/CMR may be common to TRPs/CMRs (see FIG. 5B). FIG. 5B shows a case that a TRP/CMR index corresponding to a certain subband index is a reference.

The delay/doppler/phase of the reference TRP/CMR and the reference subband index may be assumed to be zero. For the rest other than the reference TRP/CMR nor reference subband, subband reporting (here, N × S - 1 (= (S - 1) + (N - 1) × S)) may be performed.

For reporting of the reference TRP/CMR and the reference subband index, at least one of Option 3-2-1 to Option 3-2-3 below may be applied.

### <<Option 3-2-1>>

At least one of the reference TRP/CMR and the reference subband index may be determined by the UE. The UE may report a CRI (reference CRI) corresponding to the reference TRP/CMR and the reference subband index. This allows the reference CMR and the reference subband index to be notified to the base station.

### <<Option 3-2-2>>

At least one of the reference TRP/CMR and the reference subband index may be indicated by the network (for example, base station). With respect to a CRI and a subband index indicated as the reference subband of the reference TRP/CMR, the UE may assume that the delay/doppler/phase is zero.

### <<Option 3-2-3>>

The reference TRP/CMR and the reference subband index may be the smallest/largest subband index of the first/last configured CMR. The reference TRP/CMR and the reference subband index may be the smallest/largest subband index of a CMR resource having the lowest/highest CRI index. With respect to a CRI and a subband index defined as the reference subband of the reference TRP/CMR, the UE may assume that the delay/doppler/phase is zero.

In Option 3-2-1/3-2-2/3-2-3, the UE may report (S - 1) + (N - 1) × S offset values. The value of S - 1 corresponds to offset values for the rest of the subbands of the reference TRP/CMR. The value of (N - 1) × S corresponds to offset values for subbands of the rest of the TRPs/CMRs. For the value range of offset, at least one of [-Y, Y] (positive/negative), [0, Y] (positive), or [-Y, 0] (negative) may be employed, as indicated in Option 2-1/2-2/2-3 of the second embodiment.

### {Option 3-3}

In a case where subband reporting is configured, the reference TRP/CMR may be determined in any method indicated in Option 2-1/2-2/2-3 of the second embodiment. In addition, the reference subband index (for example, a subband index that the delay/doppler/phase is assumed to be zero) may be determined/indicated/defined in advance per TRP/CMR.

N - 1 offset values may be reported as offsets between TRPs of the reference subband index. The offsets between TRPs of the reference subband index may be reported from N - 1 TRPs compared with the reference subband index of the reference TRP/CMR. This may be considered as wideband offsets. Then, regarding offsets between subbands of each TRP compared with the reference subband in each TRP, (N - 1) × (S - 1) offset values may be reported. The first (N - 1) offset values may have a quantization granularity different from that of the rest (N - 1) × (S - 1) offset values.

### <Fourth Embodiment>

A fourth embodiment relates to a relation between a configuration of a report quantity and at least one of the reference TRP/CMR and the reference subband. The fourth embodiment also relates to a relation between the configuration of the report quantity and wideband reporting/subband reporting. At least one of the reference TRP/CMR and the reference subband may be configured over a plurality of CMRs or may be configured per CMR.

In a case where the delay offset and doppler/phase offset are supported as the report quantity (for example, reporting quantity), when the delay offset is configured (Configuration 1-1 of the first embodiment) or the doppler/phase offset is configured (Configuration 1-2 of the first embodiment), one reference TRP/CMR and one reference subband may be configured/employed.

In a case where the delay offset and doppler/phase offset are supported as the report quantity (for example, reporting quantity), when the delay offset and the doppler/phase offset are configured (Configuration 1-3 of the first embodiment), at least one of Option 4-1 to Option 4-2 below may be applied, for at least one of the reference TRP/CMR and the reference subband.

### {Option 4-1}

At least one of the reference TRP/CMR and the reference subband may be configured the same for/in common to the delay offset and the doppler/phase offset. The UE may report information related to one reference TRP/CMR (for example, a corresponding CRI) configured in common and delay offset values and doppler/phase offset values with respect to the rest of the TRPs/CMRs other than the reference TRP/CMR.

In this case, as the offset values, Type A/Type B may be employed. The common reference CMR (common refrrence CMT) may be selected based on Type A or Type B. Which of Type A/Type B is to be employed may be configured by using higher layer signaling, may be defined in a specification in advance, or may be reported by the UE (or selected by the UE).

In a case where the reference CMR is selected based on the value of Type A, the offset values to be reported (or the values of Type A) may be all positive or all negative. In a case where the reference CMR is selected based on the value of Type B, it may be allowed that the offset values to be reported (or the values of Type B) include both positive ones and negative ones.

In a case where Type A is configured, the UE may select, as the reference TRP/CMR, a TRP/CMR with the delay offset and the doppler/phase offset being the smallest or largest. In the case where Type A is configured, the UE may select, as the reference subband, a subband with the delay offset and the doppler/phase offset being the smallest or largest.

In a case where Type B is configured, the UE may select, as the reference TRP/CMR, any TRP/CMR from among a plurality of TRPs/CMRs. In the case where Type B is configured, the UE may select, as the reference subband, any subband from among a plurality of subbands.

### {Option 4-2}

At least one of the reference TRP/CMR and the reference subband may be configured to be different/separate between the delay offset and the doppler/phase offset.

In this case, for the delay offset and the doppler/phase offset, the respective references (for example, two sets of references) may be reported. For example, for the delay offset, the UE may determine/report at least one of a first reference TRP/CMR and a first reference subband and for the doppler/phase offset, the UE may determine/report at least one of a second reference TRP/CMR and a second reference subband.

In a case where the delay offset and doppler/phase offset are supported as the report quantity (for example, reporting quantity), when the delay offset is configured (Configuration 1-1 of the first embodiment) or the doppler/phase offset is configured (Configuration 1-2 of the first embodiment), at least one of wideband reporting/subband reporting may be configured/employed.

In a case where the delay offset and doppler/phase offset are supported as the report quantity (for example, reporting quantity), when the delay offset and the doppler/phase offset are configured (Configuration 1-3 of the first embodiment), at least one of Option 4-3 to Option 4-4 below may be applied, for wideband reporting/subband reporting.

### {Option 4-3}

The wideband reporting/subband reporting may be configured the same for/in common to the delay offset and the doppler/phase offset. For example, for the delay offset and the doppler/phase offset, the wideband reporting only, the subband reporting only, or both the wideband reporting and subband reporting may be configured.

### {Option 4-4}

The wideband reporting/subband reporting may be configured to be different/separate between the delay offset and the doppler/phase offset. For example, for the delay offset, the wideband reporting only, the subband reporting only, or both the wideband reporting and subband reporting may be configured, and for the doppler/phase offset, apart from the delay offset, the wideband reporting only, the subband reporting only, or both the wideband reporting and subband reporting may be configured.

In at least one of Option 4-1 to Option 4-4, the quantization range/granularity may be different between the delay offset and the doppler/phase offset.

### <Fifth Embodiment>

A fifth embodiment relates to a CSI mapping order for a case where reporting of at least one of the delay offset and the doppler/phase offset is supported.

In a case where reporting of at least one of the delay offset and the doppler/phase offset is supported, the CSI mapping order may be determined based on at least one of a configuration of a report quantity and a configuration of wideband reporting/subband reporting.

In a case where the delay offset and doppler/phase offset are supported as the report quantity (for example, reporting quantity), when the delay offset (Configuration 1-1 of the first embodiment) or doppler/phase offset (Configuration 1-2 of the first embodiment) is configured and the wideband reporting is configured, at least one of Option 5-1 to Option 5-2 below may be applied.

### {Option 5-1}

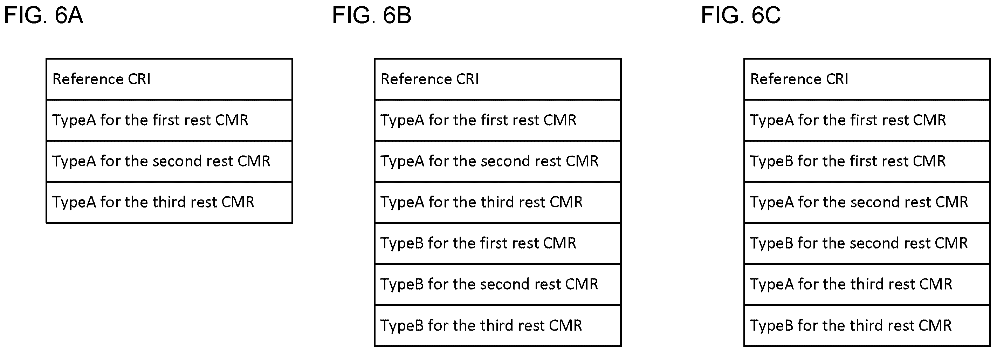

The CSI mapping order may be an order: a reference CRI (if reported); and delay/doppler/phase offset values for the first, second, and third CMRs (for example, the rest of the CMRs other than the reference CMR) in accordance with a configured ordering of CMRs (see FIG. 6A). Although FIG. 6A shows a case that Type A (the offset values are all positive or all negative) is configured/employed, the order is not limited to this.

### {Option 5-2}

The CSI mapping order may be an order: a reference CRI (if reported); and delay/doppler/phase offset values for the first, second, and third CMRs (for example, the rest of the CMRs other than the reference CMR) in accordance with an ascending/descending ordering of CMRs (for example, CSI-RS resource indices) (see FIG. 6A).

In a case where the delay offset and doppler/phase offset are supported as the report quantity (for example, reporting quantity), when the delay offset and the doppler/phase offset are configured (Configuration 1-3 of the first embodiment) and the wideband reporting is configured, at least one of Option 5-3 to Option 5-7 below may be applied.

### {Option 5-3}

In a case where a common reference TRP/CRM or common CRI for the delay offset and doppler/phase offset is configured/employed, the CSI mapping order may be an order: a reference CRI; Type A offset values for the first, second, and third CMRs (for example, the rest of the CMRs other than the reference CMR) in accordance with a certain CMR order; and Type B offset values for the first, second, and third CMRs (for example, the rest of the CMRs other than the reference CMR) in accordance with the CMR order the same as that of Type A (see FIG. 6B).

The certain CMR order may be a configured ordering of CMRs or an ascending/descending ordering of CMRs (for example, CSI-RS resource indices). Type A offset values may correspond to delay offsets and Type B offsets may correspond to doppler/phase offsets, or this may be the opposite.

### {Option 5-4}

In a case where a common reference TRP/CRM or common CRI for the delay offset and doppler/phase offset is configured/employed, the CSI mapping order may be an order: a reference CRI; a Type A offset value and Type B offset value for the first rest of the CMRs in accordance with a certain CMR order; a Type A offset value and Type B offset value for the second rest of the CMRs in accordance with the certain CMR order; and a Type A offset value and Type B offset value for the third rest of the CMRs in accordance with the certain CMR order (see FIG. 6C).

The certain CMR order may be a configured ordering of CMRs or an ascending/descending ordering of CMRs (for example, CSI-RS resource indices). Type A offset values may correspond to delay offsets and Type B offsets may correspond to doppler/phase offsets, or this may be the opposite.

### {Option 5-5}

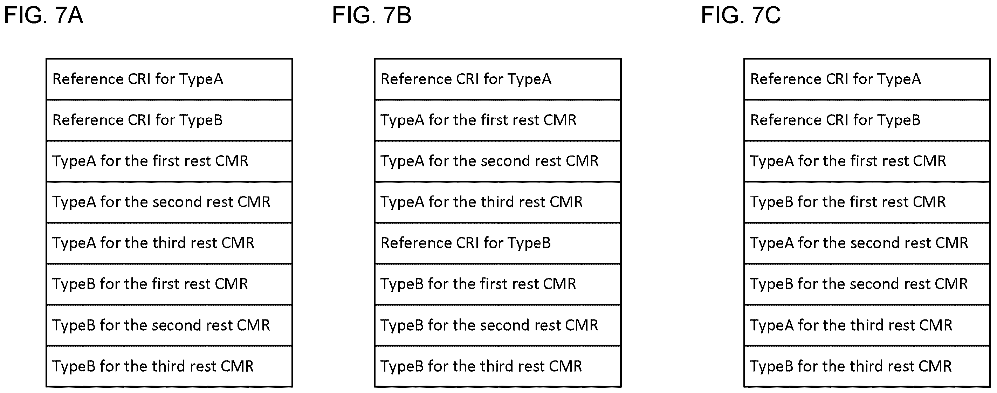

In a case where different/separate reference TRPs/CRMs or different/separate CRIs for the delay offset and doppler/phase offset are configured/employed, the CSI mapping order may be an order: a reference CRI for Type A; a reference CRI for Type B; Type A offset values for the first, second, and third CMRs (for example, the rest of the CMRs other than the reference CMR) in accordance with a certain CMR order; and Type B offset values for the first, second, and third CMRs (for example, the rest of the CMRs other than the reference CMR) in accordance with the CMR order the same as that of Type A (see FIG. 7A).

The certain CMR order may be a configured ordering of CMRs or an ascending/descending ordering of CMRs (for example, CSI-RS resource indices). Type A offset values may correspond to delay offsets and Type B offsets may correspond to doppler/phase offsets, or this may be the opposite.

### {Option 5-6}

In a case where different/separate reference TRPs/CRMs or different/separate CRIs for the delay offset and doppler/phase offset are configured/employed, the CSI mapping order may be an order: a reference CRI for Type A; Type A offset values for the first, second, and third CMRs (for example, the rest of the CMRs other than the reference CMR) in accordance with a certain CMR order; a reference CRI for Type B; and Type B offset values for the first, second, and third CMRs (for example, the rest of the CMRs other than the reference CMR) in accordance with the CMR order the same as that of Type A (see FIG. 7B).

The certain CMR order may be a configured ordering of CMRs or an ascending/descending ordering of CMRs (for example, CSI-RS resource indices). Type A offset values may correspond to delay offsets and Type B offsets may correspond to doppler/phase offsets, or this may be the opposite.

### {Option 5-7}

In a case where different/separate reference TRPs/CRMs or different/separate CRIs for the delay offset and doppler/phase offset are configured/employed, the CSI mapping order may be an order: a reference CRI for Type A; a reference CRI for Type B; a Type A offset value and Type B offset value for the first rest of the CMRs in accordance with a certain CMR order; a Type A offset value and Type B offset value for the second rest of the CMRs in accordance with the certain CMR order; and a Type A offset value and Type B offset value for the third rest of the CMRs in accordance with the certain CMR order (see FIG. 7C).

The certain CMR order may be a configured ordering of CMRs or an ascending/descending ordering of CMRs (for example, CSI-RS resource indices). Type A offset values may correspond to delay offsets and Type B offsets may correspond to doppler/phase offsets, or this may be the opposite.

In a case where the delay offset and doppler/phase offset are supported as the report quantity (for example, reporting quantity), when the delay offset (Configuration 1-1 of the first embodiment) or doppler/phase offset (Configuration 1-2 of the first embodiment) is configured and the subband reporting is configured, the CSI mapping order may be determined taking account of a subband dimension.

For example, based on Option 5-1/5-2, another dimension (for example, subband dimension) may be added. Ordering of the subband dimension to be added may be taken account in each TRP/CMR or all the TRPs/CMRs (or over TRPs/CMRs). A reference subband index to be added over CMRs/per CMR may be disposed before or immediately before an offset value of each CMR.

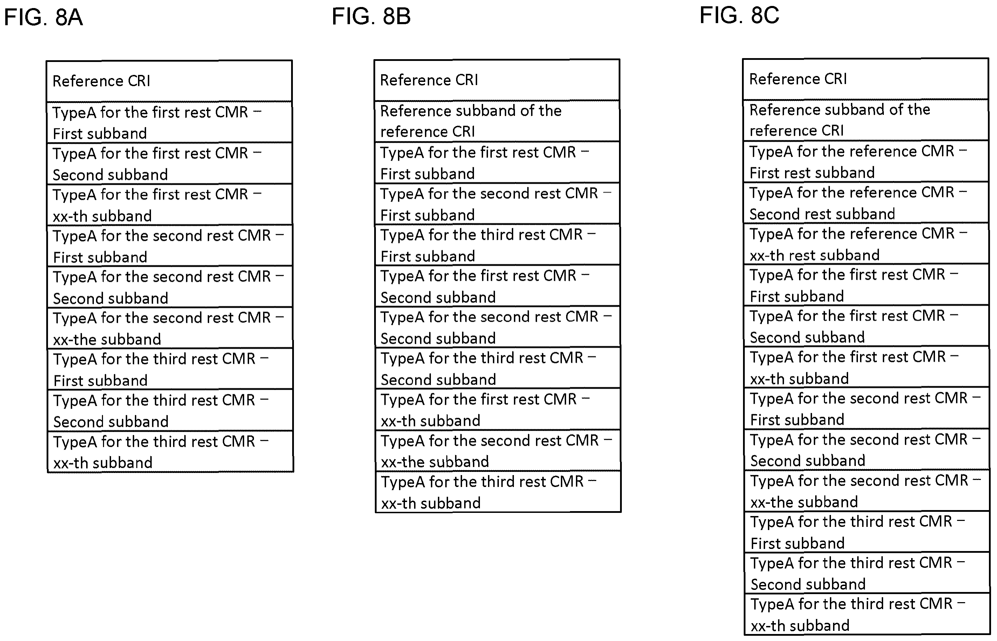

FIG. 8A shows an example of a mapping order, in a case where the reference CRI and the first to third rest of the CMRs are reported, with a subband dimension taken account in each CMR (the first rest of the CMRs/the second rest of the CMRs/the third rest of the CMRs).

FIG. 8B shows an example of a mapping order, in a case where the reference CRI, a reference subband of the reference CRI, and the first to third rest of the CMRs are reported, with a subband dimension taken account in all the CMRs (or over the CMRs).

FIG. 8C shows an example of a mapping order, in a case where the reference CRI, a reference subband of the reference CRI, reference CMRs corresponding to the rest of the subbands, and the first to third rest of the CMRs are reported, with a subband dimension taken account in each CMR (reference CMR/the first rest of the CMRs/the second rest of the CMRs/the third rest of the CMRs).

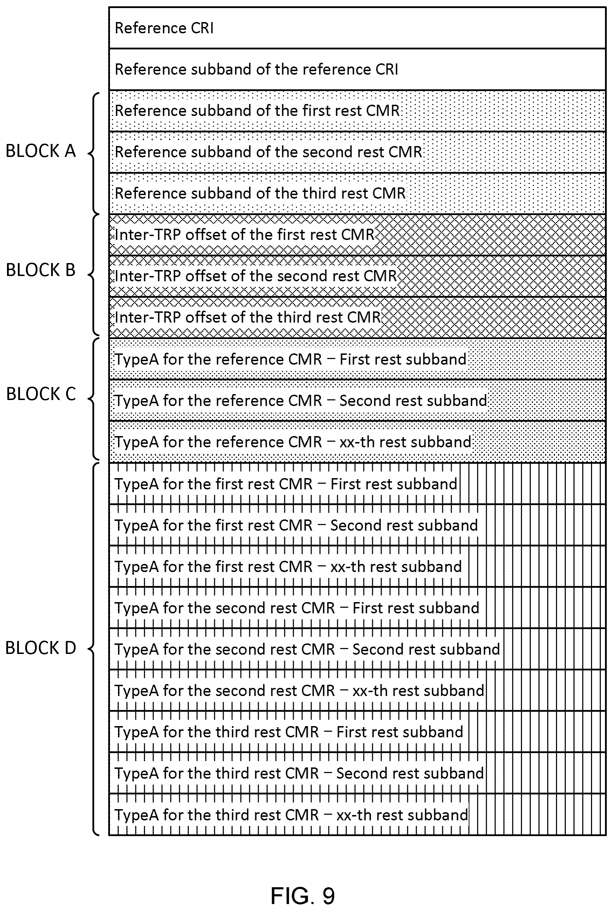

FIG. 9 shows an example of another CSI mapping order taking account of a subband dimension. In FIG. 9, BLOCK A to BLOCK D may be reordered or may be interlaced.

In a case where the delay offset and doppler/phase offset are supported as the report quantity (for example, reporting quantity), when the delay offset and the doppler/phase offset are configured (Configuration 1-3 of the first embodiment) and the subband reporting is configured, the CSI mapping order may be determined taking account of a subband dimension.

For example, similarly to FIGS. 8A to 8C, the CSI mapping order may be determined with a subband dimension added and a relation between a CMR order and a Type A/B order (subsequential or interlaced ordering) taken account. A reference subband index to be added over CMRs/per CMR may be disposed before or immediately before an offset value of each CMR.

### <Sixth Embodiment>

A sixth embodiment relates to reporting of a delay/doppler/phase offset value.

With respect to up to N (for example, N = 4) CSI-RS/TRS resources (or CMRs) configured by RRC, a case that a delay/doppler/phase offset value for part of the TRPs (or CMRs) is extremely large (or exceeds a certain threshold) may occur. In this case, reporting of the offset value may be performed by using at least one of Option 6-1 to Option 6-2 below.

### {Option 6-1}

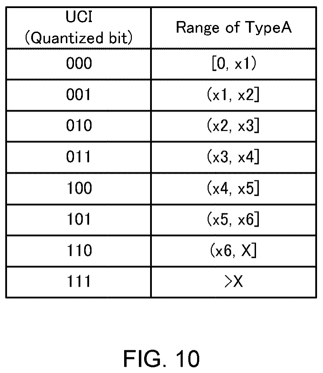

While a UE reports an offset value (for example, delay offset value) for a TRP/CMR exceeding a certain threshold, the UE may indicate that the reported value is in a range over the certain threshold. For example, in a case where a value range of offset is associated with a plurality of UCI bits (or quantized bits, codepoints), a certain UCI bit (for example, "111") may indicate exceeding the certain threshold (see FIG. 10).

With this, an increase in an offset value to be reported can be suppressed, even in a case that a delay/doppler/phase offset value for part of the TRPs (or CMRs) is extremely large (or exceeds the certain threshold). This enables an increase in overhead of CSI (or UCI) to be suppressed.

### {Option 6-2}

A UE may perform control not to report an offset value (for example, delay offset value) for a TRP/CMR exceeding a certain threshold. In this case, TRP/CMR selection for reporting may be performed and a TRP/CMR (or CRI) to be reported may be reported by the UE. For example, the UE may indicate a TRP/CMR for which an offset value is reported. Such indication of the TRP/CMR may be performed with a bitmap. For another TRP/CMR indicated/selected not for reporting of any offset value, the UE may perform control not to report any offset value.

In this case, in CSI reporting, two configurations of CSI reporting may be performed. The first part may include a reference CRI/reference subband index and a TRP selection indication (or information of a TRP/CMR for which an offset value is reported). The second part may include the offset value for the TRP/CMR to be reported. A base station can judge a size (or payload size) of the second part on the basis of the first part.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability. Note that "supporting" and "whether to support" may be interchangeably interpreted.

The specific UE capability may indicate at least one of the following:
- supporting of specific processing/operation/control/information for at least one of the above-described embodiments (or options)
- supporting of inter-TRP/CMR delay/doppler/phase offset measurement/reporting
- the number of TRPs/CMRs supported for inter-TRP/CMR delay/doppler/phase offset measurement/reporting
- supporting of wideband reporting/subband reporting for inter-TRP/CMR delay/doppler/phase offset measurement/reporting, supporting of configuration(s) common to/separate for different report quantities of an offset of delay/doppler/phase
- supporting of standalone reporting
- supporting of configuration of a reference TRP/CMR per CMR/over CMRs and a reference subband index, or supporting of determination, by a UE, of a reference TRP/CMR and a reference subband index
- supporting of configuration of a reference(s) common to or separate for different report quantities
- supporting of a positive/negative offset value for reporting
- supporting of reporting of an offset value between TRPs/CMRs and an offset value between subbands
- supporting of different quantized granularities for a TRP/CMR offset value and an offset value between subbands

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be any RRC parameter for a specific release (for example, Rel. 18/19), or the like.

When the UE does not support at least one of the specific UE capabilities above or is not configured with the specific information, operation of Rel. 15/16/17 may be applied, for example.

### (Supplementary Note)

Regarding one embodiment of the present disclosure, the following supplementary notes of the invention will be given.

### {Supplementary Note 1-1}

A terminal including: a receiving section that receives information related to a plurality of channel measurement resources and information related to a report quantity; and a control section that performs, based on the information related to the report quantity, control to report an offset related to one or more parameters between the plurality of channel measurement resources.

### {Supplementary Note 1-2}

The terminal according to supplementary note 1-1, wherein the control section acquires, taking a specific channel measurement resource out of the plurality of channel measurement resources as a reference, the offset related to the one or more parameters between the reference and the rest of the channel measurement resources.

### {Supplementary Note 1-3}

The terminal according to supplementary note 1-1 or 1-2, wherein the control section selects a specific channel measurement resource to be a reference out of the plurality of channel measurement resources and reports information related to the specific channel measurement resource and an offset value related to the one or more parameters between the specific channel measurement resource and the rest of the channel measurement resources.

### {Supplementary Note 1-4}

The terminal according to any one of supplementary notes 1-1 to 1-3, wherein the receiving section receives information related to a specific channel measurement resource to be a reference out of the plurality of channel measurement resources, and the control section reports an offset value related to the one or more parameters between the specific channel measurement resource and the rest of the channel measurement resources.

### {Supplementary Note 2-1}

A terminal including: a receiving section that receives information related to a plurality of channel measurement resources and information related to a report quantity; and a control section that performs, based on the information related to the report quantity, control to report an offset related to one or more parameters between one or more reference channel measurement resources selected from the plurality of channel measurement resources and the rest of the channel measurement resources other than the reference channel measurement resources, wherein the control section judges, based on at least one of the information related to the report quantity and a band type for reporting to be performed, a mapping order for channel state information.

### {Supplementary Note 2-2}

The terminal according to supplementary note 2-1, wherein the control section reports, in a case of reporting an offset related to a plurality of parameters, information related to one reference channel measurement resource.

### {Supplementary Note 2-3}

The terminal according to supplementary note 2-1 or 2-2, wherein the control section reports, in a case of reporting an offset related to a plurality of parameters, information related to a plurality of reference channel measurement resources.

### {Supplementary Note 2-4}

The terminal according to any one of supplementary notes 2-1 to 2-3, wherein the control section reports, in a case where subband reporting is configured as the band type, an offset value corresponding to the rest of the channel measurement resources corresponding to every subband.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

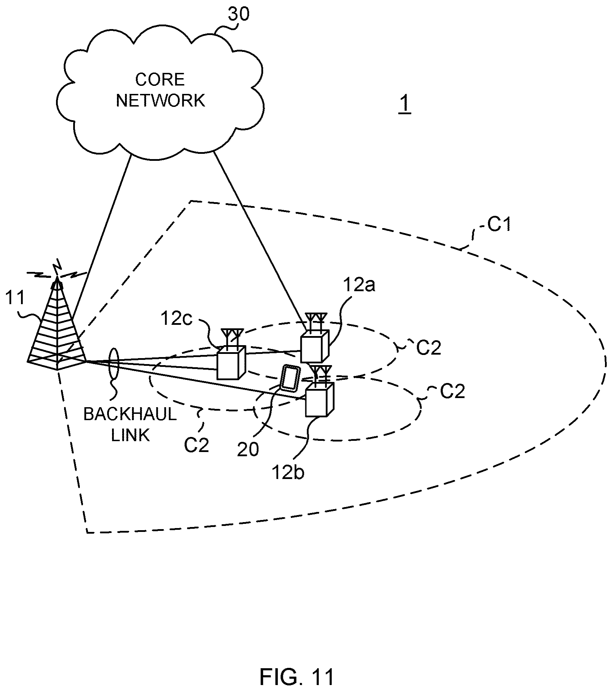

FIG. 11 is a diagram to show an example of a schematic structure of the radio communication system according to one embodiment. The radio communication system 1 (which may be simply referred to as system 1) may be a system that implements communication by using Long Term Evolution (LTE), 5th generation mobile communication system New Radio (5G NR), or the like the specification of which has been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected to each other by a wired connection (for example, optical fiber in compliance with the Common Public Radio Interface (CPRI), the X2 interface, or the like) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

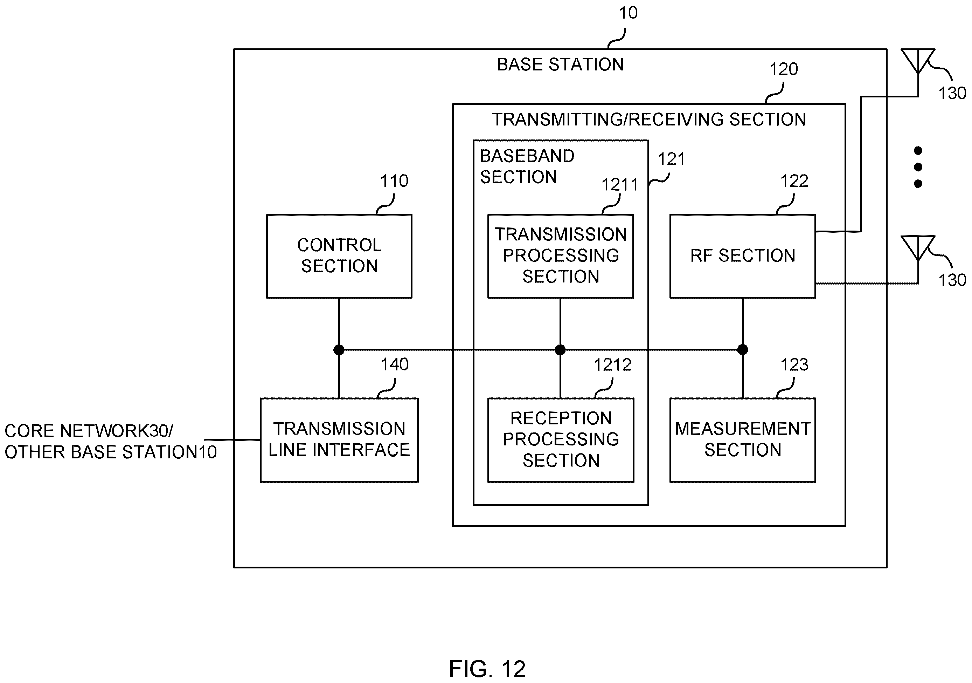

FIG. 12 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit, to a terminal, information related to a plurality of channel measurement resources and information related to a report quantity. The control section 110 may indicate, to the terminal, by using the information related to the report quantity, reporting of an offset related to one or more parameters between the plurality of channel measurement resources.

The control section 110 may indicate, to the terminal, based on the information related to the report quantity, reporting of an offset related to one or more parameters between one or more reference channel measurement resources selected from the plurality of channel measurement resources and the rest of the channel measurement resources other than the reference channel measurement resources. The control section 110 may indicate, based on at least one of the information related to the report quantity and a band type for reporting to be performed, a mapping order for channel state information.

### (User Terminal)

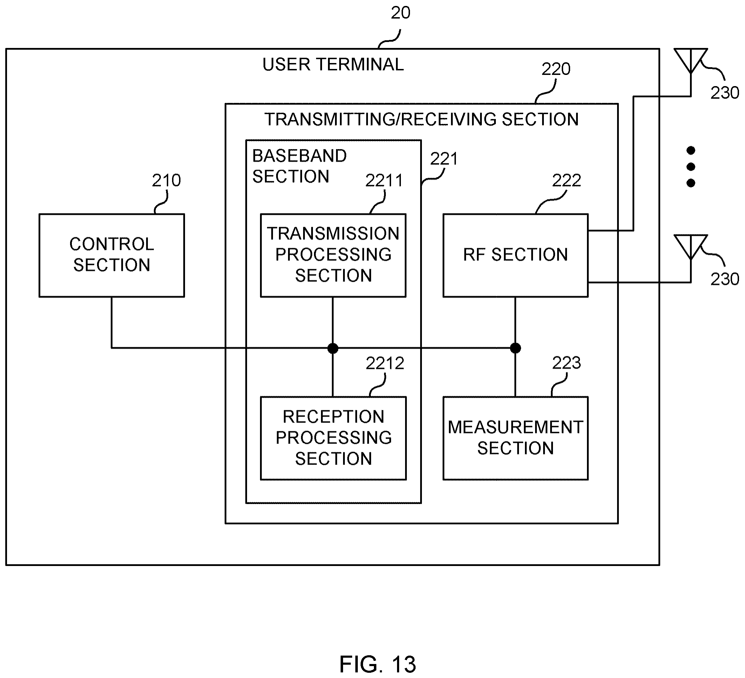

FIG. 13 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information related to a plurality of channel measurement resources and information related to a report quantity. The control section 210 may perform, based on the information related to the report quantity, control to report an offset related to one or more parameters between the plurality of channel measurement resources. The control section 210 may acquire, taking a specific channel measurement resource out of the plurality of channel measurement resources as a reference, the offset related to the one or more parameters between the reference and the rest of the channel measurement resources. The control section 210 may select a specific channel measurement resource to be a reference out of the plurality of channel measurement resources and report information related to the specific channel measurement resource and an offset value related to the one or more parameters between the specific channel measurement resource and the rest of the channel measurement resources. The control section 210 may report an offset value related to the one or more parameters between the specific channel measurement resource and the rest of the channel measurement resources.

The control section 210 may perform, based on the information related to the report quantity, control to report the offset related to the one or more parameters between one or more reference channel measurement resources selected from the plurality of channel measurement resources and the rest of the channel measurement resources other than the reference channel measurement resources. The control section 210 may judge, based on at least one of the information related to the report quantity and a band type for reporting to be performed, a mapping order for channel state information.

The control section 210 may perform, in a case of reporting an offset related to a plurality of parameters, control to report information related to one reference channel measurement resource. The control section 210 may perform, in a case of reporting an offset related to a plurality of parameters, control to report information related to a plurality of reference channel measurement resources. The control section 210 may perform, in a case where subband reporting is configured as the band type, control to report an offset value corresponding to the rest of the channel measurement resources corresponding to every subband.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

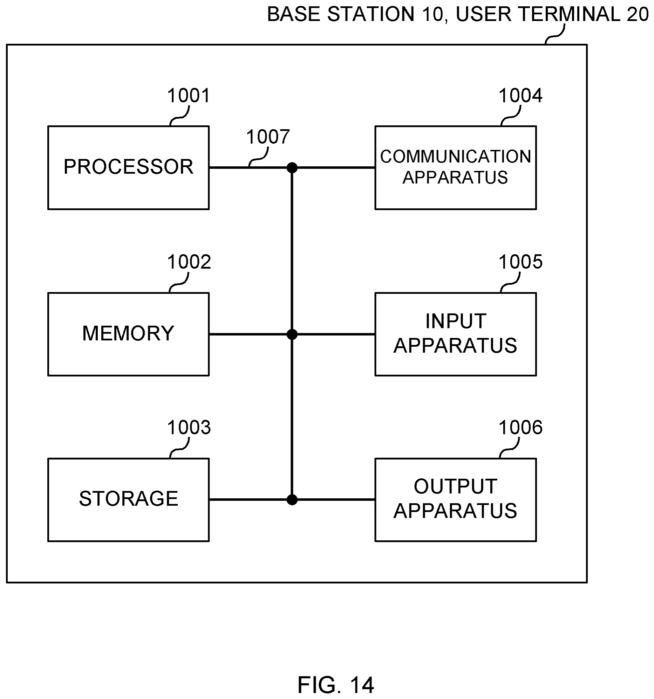

For example, a base station, a user terminal, and so on according to one embodiment of the present disclosure may function as a computer that executes the processes of the radio communication method of the present disclosure. FIG. 14 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

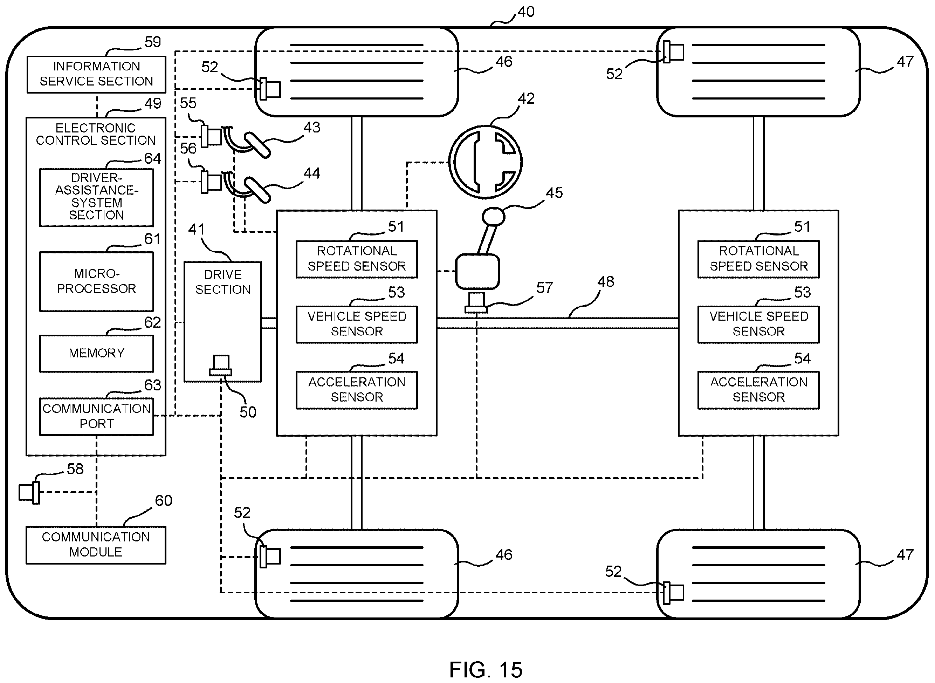

FIG. 15 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives information related to a plurality of channel measurement resources and information related to a report quantity; and
a control section that performs, based on the information related to the report quantity, control to report an offset related to one or more parameters between one or more reference channel measurement resources selected from the plurality of channel measurement resources and the rest of the channel measurement resources other than the reference channel measurement resources, wherein
the control section judges, based on at least one of the information related to the report quantity and a band type for reporting to be performed, a mapping order for channel state information.

2. The terminal according to claim 1, wherein
the control section reports, in a case of reporting an offset related to a plurality of parameters, information related to one reference channel measurement resource.

3. The terminal according to claim 1, wherein
the control section reports, in a case of reporting an offset related to a plurality of parameters, information related to a plurality of reference channel measurement resources.

4. The terminal according to claim 1, wherein
the control section reports, in a case where subband reporting is configured as the band type, an offset value corresponding to the rest of the channel measurement resources corresponding to every subband.

5. A radio communication method for a terminal, the radio communication method comprising:
receiving information related to a plurality of channel measurement resources and information related to a report quantity; and
performing, based on the information related to the report quantity, control to report an offset related to one or more parameters between one or more reference channel measurement resources selected from the plurality of channel measurement resources and the rest of the channel measurement resources other than the reference channel measurement resources, wherein
a mapping order for channel state information is judged, based on at least one of the information related to the report quantity and a band type for reporting to be performed.

6. A base station comprising:
a transmitting section that transmits, to a terminal, information related to a plurality of channel measurement resources and information related to a report quantity; and
a control section that indicates, to the terminal, based on the information related to the report quantity, reporting of an offset related to one or more parameters between one or more reference channel measurement resources selected from the plurality of channel measurement resources and the rest of the channel measurement resources other than the reference channel measurement resources, wherein
the control section indicates, based on at least one of the information related to the report quantity and a band type for reporting to be performed, a mapping order for channel state information.
